(19) 

Europäisches
Patentamt

European
Patent Office

Office européen
des brevets

(11) **EP 1 648 728 B1**

(12) **EUROPÄISCHE PATENTSCHRIFT**

(45) Veröffentlichungstag und Bekanntmachung des
Hinweises auf die Patenterteilung:
**10.09.2008 Patentblatt 2008/37**

(21) Anmeldenummer: **04741166.5**

(22) Anmeldetag: **17.07.2004**

(51) Int Cl.:
***B60K 23/08*** *(2006.01)*

(86) Internationale Anmeldenummer:
**PCT/EP2004/008091**

(87) Internationale Veröffentlichungsnummer:
**WO 2005/009772 (03.02.2005 Gazette 2005/05)**

(54) **STEUERVORRICHTUNG FÜR EIN ZUMINDEST ZEITWEISE VIERRADGETRIEBENES KRAFTFAHRZEUG**

CONTROL DEVICE FOR AN AT LEAST PARTIALLY FOUR-WHEEL DRIVEN MOTOR VEHICLE

DISPOSITIF DE COMMANDE POUR VEHICULE AUTOMOBILE A QUATRE ROUES MOTRICES AU MOINS DE FAÇON INTERMITTENTE

(84) Benannte Vertragsstaaten:
**AT DE ES FR GB IT**

(30) Priorität: **24.07.2003 DE 10333653**

(43) Veröffentlichungstag der Anmeldung:
**26.04.2006 Patentblatt 2006/17**

(73) Patentinhaber: **Bayerische Motoren Werke
Aktiengesellschaft
80809 München (DE)**

(72) Erfinder: **BILLIG, Christian
80939 München (DE)**

(56) Entgegenhaltungen:
**EP-A- 0 538 504          DE-A- 3 721 628
DE-A- 4 011 214          US-A- 5 152 362**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung bezieht sich auf eine Steuervorrichtung für ein zumindest zeitweise vierradgetriebenes Kraftfahrzeug nach dem Oberbegriff des Patentanspruchs 1, wie aus der US-A-5 152 362 bekannt.

Eine derartige Steuervorrichtung ist beispielsweise in der DE 100 54 023 A1 beschrieben. Bekannt ist demnach eine Drehmomentverteilungseinrichtung zum Verändern des Drehmomentverteilungsverhältnisses zwischen den Rädern der Vorderachse und den Rädern der Hinterachse durch entsprechende Steuerung einer Reibungskupplung als Längssperre (Übertragungskupplung). Durch die Festlegung eines Drehmomentverteilungsverhältnisses kann das Fahrverhalten eines Fahrzeuges erheblich beeinflusst werden. Der Gegenstand der DE 100 54 023 A1 beschäftigt sich dabei insbesondere mit der Fahrdynamik bei Kurvenfahrt. Hierbei kann ein zeitweise vierradgetriebenes Kraftfahrzeug ein grundsätzlich vorderradangetriebenes Kraftfahrzeug mit über eine Übertragungskupplung zuschaltbarem Hinterradantrieb, ein grundsätzlich hinterradangetriebenes Kraftfahrzeug mit über eine Übertragungskupplung zuschaltbarem Vorderradantrieb oder ein Permanent-Allradfahrzeug mit regelbarer Übertragungskupplung zur Änderung der Drehmomentverteilung zwischen Vorder- und Hinterachse sein.

Im Folgenden werden diesbezüglich verallgemeinernd als primäre Antriebsräder die permanent mit der Antriebseinheit verbundenen Räder und als sekundäre Antriebsräder die über die Übertragungskupplung bedarfsweise mit der Antriebseinheit verbindbaren Räder bezeichnet.

Weiterhin weisen derartige bekannte Steuersysteme meist eine Steuerung der Übertragungskupplung in Abhängigkeit von der Drehzahldifferenz zwischen einer Drehzahl der primären Antriebsachse und der Drehzahl der sekundären Antriebsachse auf (z. B. DE 34 27725 C2).

Es ist Aufgabe der Erfindung, ein Steuersystem eingangs genannter Art im Hinblick auf die Genauigkeit der Regelung zu verbessern.

Diese Aufgabe wird durch die Merkmale des Patentanspruchs 1 gelöst. Vorteilhafte Weiterbildungen sind die Gegenstände der abhängigen Patentansprüche.

Der Erfindung liegt die Erkenntnis zugrunde, dass im Vordergrund bei einer Allrad-Drehmomentverteilung der Fahrerwunsch stehen muss, der sich meist auf hohe oder stark wechselnde Leistungsanforderungen bei optimaler Traktion bezieht. Deshalb wird insbesondere die Fahrpedalstellung und vorzugsweise auch die Änderung der Fahrpedalstellung berücksichtigt. Gleichzeitig, aber nachgeordnet, werden auch die Grenzen für die Traktionsoptimierung berücksichtig. Diese werden durch Fahrsituationen oder Fahrzeugzustände vorgegeben, durch die eine Verspannung im Antriebsstrang erzeugt wird. Dabei wird berücksichtigt, dass Verspannungen insbesondere bei Kurvenfahrt bzw. bei Ein- und Ausparkmanövern (Lenkwinkel-Abhängigkeit) aber auch bei starken Raddrehzahldifferenzen (Blindmoment-Abhängigkeit) (beispielsweise durch unterschiedliche Reifenumfänge) auftreten. Nicht zuletzt wird bei der erfindungsgemäßen Steuervorrichtung auch auf dauerhaften Bauteilschutz im Hinblick auf mechanischen Verschleiß und Temperaturbelastungen Rücksicht genommen (Fahrzeuggeschwindigkeits-Abhängigkeit; Antriebsmoment-Abhängigkeit). Schließlich wird zusätzlich auch der Komfort, insbesondere beim Anfahren, erhöht (Motordrehzahl-Abhängigkeit).

In der Zeichnung ist ein Ausführungsbeispiel der Erfindung dargestellt. Es zeigt

Fig. 1    schematisch ein zeitweise vierradgetriebenes Fahrzeug mit einer über eine Steuereinheit einstellbaren Übertragungskupplung am Beispiel eines grundsätzlich hinterradangetriebenen Kraftfahrzeugs mit über eine Übertragungskupplung zuschaltbarem Vorderradantrieb

Fig. 2    Ausschnitte aus der Steuereinheit

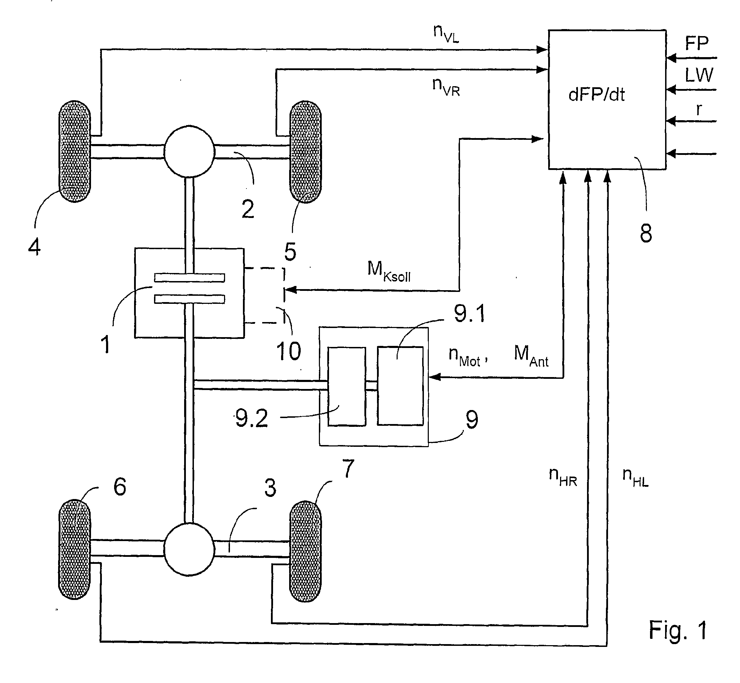

In Figur 1 ist ein zeitweise vierradgetriebenes Fahrzeug in Form eines grundsätzlich hinterradangetriebenen Kraftfahrzeugs mit bedarfsweise über eine Übertragungskupplung 1 zuschaltbarem Vorderradantrieb dargestellt. Die Übertragungskupplung 1 ist über eine Steuereinheit 8 einstellbar. Die Steuereinheit 8 kann ein ausgelagertes, z.B. direkt an der Übertragungskupplung 1 angebrachtes Zusatzsteuergerät 10 enthalten, das beispielsweise das vorgegebene Soll-Kupplungsmoment in elektrischen Strom zur Ansteuerung der Verstelleinheit (hier nicht dargestellt) der Übertragungskupplung 1 umsetzt.

Bei einem Fahrzeug nach Fig. 1 wird mit offener Übertragungskupplung 1 das gesamte Drehmoment (Antriebsmoment) der Antriebseinheit 9 auf die Räder 6 und 7 der Hinterachse 3 übertragen. Vorzugsweise besteht die Antriebseinheit 9 aus einer Brennkraftmaschine 9.1, einem Getriebe 9.2 und mindestens einem Antriebssteuergerät (hier nicht näher dargestellt). Das Antriebssteuergerät kommuniziert beispielsweise über den bekannten Kfz.-Datenbus CAN mit der Steuereinheit 8. In Fig. 1 sind die Hinterräder 6 und 7 die primären Antriebsräder, da sie permanent mit der Antriebseinheit 9 verbunden sind. Mit zunehmendem Kupplungsmoment an der Übertragungskupplung 1 treibt die Antriebseinheit 9 auch die Räder 4 und 5 der Vorderachse 2 an. Somit sind die Vorderräder 4 und 5 die sekundären Antriebsräder.

Die Steuereinheit 8 erfasst zu weiteren Eingangssignalen hinzu insbesondere ein Eingangssignal zur Erfassung der Stellung eines Fahrpedals, z.B. den Betätigungswinkel FP des sog. Gaspedals. Daraus ermittelt die Steuereinheit 8 die Geschwindigkeit der Gaspedalbetätigung dFP/dt. Weiterhin erfasst oder ermittelt die Steuereinheit 8 die Motordrehzahl $n_{Mot}$, das Motormoment (=Brennkraftmaschinen-Drehmoment) oder das Antriebsmoment $M_{Ant}$ (=getriebeausgangsseitiges Kardanwellendrehmoment), den Lenkwinkel LW, die Gierrate bzw. Gierwinkelgeschwindigkeit r sowie die Raddrehzahlen $n_{VL}$, $n_{HL}$, $n_{VR}$, $n_{HR}$ aller Räder 4, 5, 6, 7. Aus diesen Raddrehzahlen $n_{VL}$, $n_{HL}$, $n_{VR}$, $n_{HR}$ werden im Zusammenhang mit weiteren in der Steuereinheit 8 vorliegenden Informationen, die Radgeschwindigkeiten $v_{VL}$, $v_{HL}$; $v_{VR}$, $v_{HR}$ aller Räder 4, 5, 6, 7 sowie die Fahrzeuggeschwindigkeit v ermittelt.

Zur Verteilung des Antriebsmoments der Antriebseinheit 9 wird ein einzustellendes Kupplungsmoment $M_{Ksoll}$ für die zwischen der Antriebseinheit 9 bzw. den primären Antriebsrädern 6 und 7 und den sekundären Antriebsrädern 4 und 5 angeordneten Übertragungskupplung 1 vorgegeben. Vorzugsweise gibt die Steuereinheit 8 das Soll-Kupplungsmoment $M_{Ksoll}$ an das Zusatzsteuergerät 10 aus. Das Zusatzsteuergerät 10 setzt das Soll-Kupplungsmoment $M_{Ksoll}$ in einen Strom zur Ansteuerung der hier nicht eigens dargestellten Aktuatorvorrichtung um.

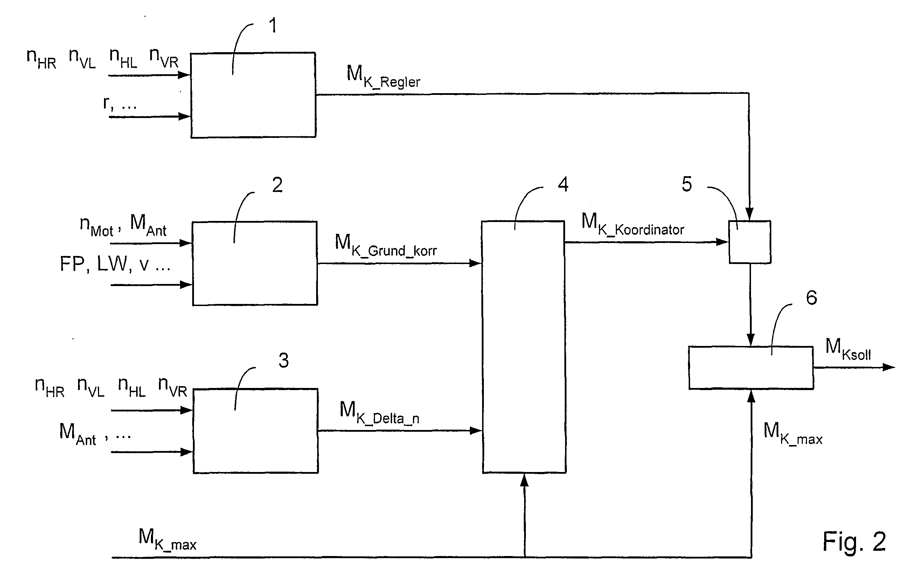

In Fig. 2 sind weitere Details der Steuereinheit 8 gezeigt.

In der Steuereinheit 8 wird mittels der Reglereinheit 1 unter Berücksichtigung von Radschlupf und fahrdynamischen Größen, wie Übersteuern und Untersteuern, ein fahrdynamischer Regelanteil $M_{K\_Regler}$ für die Bestimmung des Soll-Kupplungsmoments $M_{Ksoll}$ ermittelt.

In der Vorsteuereinheit 2 wird der korrigierte Grundvorsteueranteil $M_{K\_Grund-korr}$ ermittelt und vorzugsweise an eine Koordinatoreinheit 4 ausgegeben. In einer Blindmomentermittlungseinheit 3 kann ein radschlupfbezogenes Blindmoment $M_{K\_Delta\_n}$ ermittelt werden und ebenfalls an die Koordinatoreinheit 4 ausgegeben werden. Unter Blindmomenten werden Störmomente verstanden, die zu einer Verspannung des Antriebsstranges führen können, z. B. durch unterschiedliche Reifenumfänge. Das Blindmoment $M_{K\_Delta\_n}$ wird vorzugsweise abhängig von den Radgeschwindigkeiten, dem Motor- oder Antriebsmoment, dem Fahrzeuggewicht und Reifentoleranzfaktoren ermittelt. Die Blindmomentermittlungseinheit 3 und/oder die Koordinatoreinheit 4 sind lediglich vorteilhafte Weiterbildungen der Erfindung. Die Vorsteuereinheit 2 kann auch direkt mit dem Addierer 5 verbunden sein.

Das Ausgangsmoment $M_{K\_Koordinator}$ der Koordinatoreinheit 4, das meistens gleich dem korrigierten Grundvorsteueranteil $M_{K\_Grund\_korr}$ entspricht, wird zum Addierer 5 weitergeleitet. Im Addierer 5 findet die Summierung des Ausgangsmoments $M_{K\_Koordinator}$ der Koordinatoreinheit 4 mit dem fahrdynamischer Regelanteil $M_{K\_Regler}$ statt. In der Ausgabeeinheit 6 wird das tatsächlich einzustellende Soll-Kupplungsmoment $M_{Ksoll}$ endgültig bestimmt und vorzugsweise an das Zusatzsteuergerät 10 ausgegeben (vgl. Fig.1).

Die Steuereinheit 8 berücksichtigt bei der Ermittlulng des Soll-Kupplungsmoments $M_{Ksoll}$ den Grundvorsteueranteil $M_{K\_Grund}$, der in Abhängigkeit von der Fahrpedalstellung FP in der Vorsteuereinheit 2 z. B. in Form einer Kennlinie vorgegeben wird. Abhängig von weiteren Parametern, die die Steuereinheit erfasst oder ermittelt, wird der Grundvorsteueranteil $M_{K\_Grund}$ zu einem korrigierten Grundvorsteueranteil $M_{K\_Grund\_korr}$ verändert.

In der Vorsteuereinheit 2 wird als weiterer Parameter die Geschwindigkeit der Fahrpedalbetätigung dFP/dt ermittelt. Mit steigender Geschwindigkeit der Fahrpedalbetätigung, d.h. mit steigender Steilheit des Gradienten der Fahrpedaländerung, wird der Grundvorsteueranteil $M_{K\_Grund}$ z.B. um einen vorgegebenen Lastwechsel-Offset $M_{K\_Grad}$, erhöht.

Weiterhin wird in der Vorsteuereinheit 2 als weiterer Parameter die Motordrehzahl $n_{Mot}$ erfasst. Mit steigender Motordrehzahl $n_{Mot}$ wird der Grundvorsteueranteil $M_{K\_Grund}$, z.B. um einen vorgegebenen Drehzahl-Offset $M_{K\_n}$ erhöht.

Weiterhin wird in der Vorsteuereinheit 2 als weiterer Parameter der Lenkwinkel LW erfasst. Mit steigendem Lenkwinkel LW wird der Grundvorsteueranteil $M_{K\_Grund}$, z.B. um einen vorgegebenen Lenkwinkel-Offset $M_{K\_LW}$ reduziert.

Weiterhin wird in der Vorsteuereinheit 2 als weiterer Parameter das Antriebsmoment $M_{Ant}$ erfasst. Mit steigendem Antriebsmoment $M_{Ant}$ wird der Grundvorsteueranteil $M_{K\_Grund}$, z. B. um einen vorgegebenen Momenten-Offset $M_{K\_M}$ erhöht.

Weiterhin wird in der Vorsteuereinheit 2 als weiterer Parameter die Fahrzeuggeschwindigkeit v ermittelt. Mit steigender Fahrzeuggeschwindigkeit v wird der Grundvorsteueranteil $M_{K\_Grund}$, z. B. um einen vorgegebenen Fahrzeuggeschwindigkeits-Offset $M_{K\_v}$ reduziert. Alternativ können abhängig von definierten Fahrzeuggeschwindigkeitsbereichen (z. B. Anfahrbereich 0-40km/h, Normalbereich 40-180km/h, Hochgeschwindigkeitsbereich >180km/h) auch maximal zulässige Grundvorsteueranteile (z. B. $M_{K\_v\_max1}$, $M_{K\_v\_max2}$, $M_{K\_v\_max3}$) vorgegeben werden, wobei der fahrzeuggeschwindigkeitsabhängige maximal zulässige Grundvorsteueranteil mit steigender Fahrzeuggeschwindigkeit v reduziert wird.

Das einzustellende Soll-Kupplungsmoment $M_{Ksoll}$ wird von der Steuereinheit 8 grundsätzlich durch Summierung des korrigierten Grundvorsteueranteils $M_{K\_Grund\_korr}$ (Norm-Vorsteuerung) mit einem fahrdynamischen Regelanteil $M_{K\_Regler}$ ermittelt, wenn nicht z. B. durch die Koordinatoreinheit 4 oder durch die Ausgabeeinheit 6 eine andere Vorschrift höhere Priorität gewinnt. Die Ausgabeeinheit 6 erhält vorzugsweise vom Zusatzsteuergerät 10 als Eingangssignal ein durch den Belastungsgrad der Aktuatorvorrichtung vorgegebenes maximal zulässiges Begrenzungsmoment $M_{K\_max}$. Dieses Begrenzungsmoment $M_{K\_max}$ kann auch in der Koordinatoreinheit 4 berücksichtigt werden.

Der korrigierte Grundvorsteueranteil $M_{K\_Grund\_korr}$ ergibt sich somit vorzugsweise durch:

$$M_{K\_Grund\_korr} = M_{K\_Grund} + M_{K\_Grad} + M_{K\_n} - M_{K\_LW} - M_{K\_v}$$

Oder (abhängig vom Fahrzeuggeschwindigkeitsbereich) durch:

$$M_{K\_Grund\_korr} =$$

$$MIN\ ((M_{K\_Grund} + M_{K\_Grad} + M_{K\_n} - M_{K\_LW})\ ,\ (M_{K\_v\_max1};\ M_{K\_v\_max2};\ M_{K\_v\_max3}))$$

Das Soll-Kupplungsmoment $M_{Ksoll}$ ergibt sich somit vorzugsweise durch:

$$M_{Ksoll} = M_{K\_Grund\_korr} - M_{K\_Delta\_n} + M_{K\_Regler}$$

und kann aber zusätzlich durch das maximal zulässige Begrenzungsmoment $M_{K\_max}$ reduziert werden.

**Patentansprüche**

1. Steuervorrichtung für ein zumindest zeitweise vierradgetriebenes Kraftfahrzeug mit einer Steuereinheit, mittels der das Antriebsmoment einer Antriebseinheit auf primäre Antriebsräder, die permanent mit der Antriebseinheit verbunden sind, und auf sekundäre Antriebsräder, die bedarfsweise über eine Übertragungskupplung mit der Antriebseinheit verbindbar sind, variabel verteilbar ist, indem die Steuereinheit ein Soll-Kupplungsmoments ermittelt, das mittels einer Aktuatorvorrichtung an der Übertragungskupplung einzustellen ist, wobei die Steuereinheit (8; 8,10) zumindest ein Eingangssignal zur Erfassung einer Fahrpedalstellung (FP) erhält und derart ausgestaltet ist, dass bei der Ermittlung des Soll-Kupplungsmoments ($M_{Ksoll}$) ein Grundvorsteueranteil ($M_{K\_Grund}$) berücksichtigt wird, der in Abhängigkeit von der Fahrpedalstellung (FP) vorgegeben wird und abhängig von weiteren Parametern, die die Steuereinheit erfasst oder ermittelt, korrigiert wird, **dadurch gekennzeichnet dass** bei der Ermittlung des Soll-Kupplungsmoments ($M_{Ksoll}$) auch ein radschlupfbezogenes Blindmoment, das zu einer Verspannung des Antriebsstranges führen kann, ($M_{K\_Delta\_n}$) berücksichtigt wird.

2. Steuervorrichtung nach Patentanspruch 1, **dadurch gekennzeichnet, dass** ein weiterer Parameter die Geschwindigkeit der Fahrpedalbetätigung (dFP/dt) ist, und dass mit steigender Geschwindigkeit der Fahrpedalbetätigung der Grundvorsteueranteil ($M_{K\_Grund}$) erhöht wird.

3. Steuervorrichtung nach Patentanspruch 1 oder 2, **dadurch gekennzeichnet, dass** ein weiterer Parameter die Motordrehzahl ($n_{Mot}$) ist, und dass mit steigender Motordrehzahl ($n_{Mot}$) der Grundvorsteueranteil ($M_{K\_Grund}$) erhöht wird.

4. Steuervorrichtung nach einem der Patentansprüche 1 bis 3, **dadurch gekennzeichnet, dass** ein weiterer Parameter der Lenkwinkel (LW) ist, und dass mit steigendem Lenkwinkel (LW) der Grundvorsteueranteil ($M_{K\_Grund}$) reduziert wird.

5. Steuervorrichtung nach einem der Patentansprüche 1 bis 4, **dadurch gekennzeichnet, dass** ein weiterer Parameter das Motormoment oder das Antriebsmoment ($M_{Ant}$) der Getriebeausgangswelle ist, und dass mit steigendem Motormoment oder Antriebsmoment ($M_{Ant}$) der Grundvorsteueranteil ($M_{K\_Grund}$) erhöht wird.

6. Steuervorrichtung nach einem der Patentansprüche 1 bis 5, **dadurch gekennzeichnet, dass** ein weiterer Parameter die Fahrzeuggeschwindigkeit (v) ist, und dass mit steigender Fahrzeuggeschwindigkeit (v) der Grundvorsteueranteil ($M_{K\_Grund}$) reduziert wird oder auf einen fahrzeuggeschwindigkeitsabhängigen maximal zulässigen Grundvorsteueranteil ($M_{K\_v\_max1};\ M_{K\_v\_max2};\ M_{K\_v\_max3}$) beschränkt wird, der mit steigender Fahrzeuggeschwindigkeit (v) reduziert wird.

7. Steuervorrichtung nach einem der Patentansprüche 1 bis 6, **dadurch gekennzeichnet, dass** das einzustellende Soll-Kupplungsmoment ($M_{Ksoll}$) von der Steuereinheit durch Summierung des korrigierten Grundvorsteueranteils ($M_{K\_Grund\_korr}$) mit einem fahrdynamischen Regelanteil ($M_{K\_Regler}$) ermittelt wird.

8. Steuervorrichtung nach einem der Patentansprüche 1 bis 7, **dadurch gekennzeichnet, dass** das einzustellende Soll-Kupplungsmoment ($M_{Ksoll}$) von der Steuereinheit unter Berücksichtigung eines durch den Belastungsgrad der Aktuatorvorrichtung vorgegebenen maximal zulässigen Begrenzungsmoments ($M_{K\_max}$) ermittelt wird.

**Claims**

1. A control device for a motor vehicle which is at least occasionally four-wheel drive, comprising a control unit, by means of which the drive torque of a drive unit can be variably distributed to primary drive wheels, which are permanently connected to the drive unit, and to secondary drive wheels which if necessary can be connected by means of a transmission coupling to the drive unit, in that the control unit determines a desired coupling torque, which is to be adjusted by means of the actuator device at the transmission clutch, wherein the control unit (8; 8, 10) receives at least one input signal to detect an accelerator position (FP) and is configured in such a way that on determination of the desired coupling torque ($M_K$ desired) a basic pre-control fraction ($M_{K\_basic}$) is taken into account, which is predetermined as a function of the accelerator position (FP) and depending on further parameters which the control unit detects or determines, is corrected, **characterised in that** on determination of the desired coupling torque ($M_K$ desired), a wheel slip-related blind torque ($M_{K\_Delta\_n}$), which can lead to a tensing of the drive train, is taken into account.

2. A control device according to claim 1, **characterised in that** a further parameter is the speed of the accelerator actuation (dFP/dt) and **in that** with increasing speed of the accelerator actuation, the basic pre-control fraction ($M_{K\_basic}$) is increased.

3. A control device according to claim 1 or 2, **characterised in that** a further parameter is the engine speed ($n_{engine}$), and **in that** with an increasing engine speed ($n_{engine}$), the basic pre-control fraction ($M_{K\_basic}$) is increased.

4. A control device according to any one of claims 1 to 3, **characterised in that** a further parameter is the steering angle (LW), and **in that** with an increasing steering angle (LW) the basic pre-control fraction ($M_{K\_basic}$) is reduced.

5. A control device according to any one of claims 1 to 4, **characterised in that** a further parameter is the engine torque or the drive torque ($M_{Ant}$) of the drive output shaft, and **in that** with an increasing engine torque or drive torque ($M_{Ant}$) the basic pre-control fraction ($M_{K\_basic}$) is increased.

6. A control device according to any one of claims 1 to 5, **characterised in that** a further parameter is the vehicle speed (v) and **in that** with an increasing vehicle speed (v) the basic pre-control fraction ($M_{K\_basic}$) is reduced or limited to a vehicle-dependent maximally permissible basic pre-control fraction ($M_{K\_v\_max1}$; $M_{K\_v\_max2}$; $M_{K\_v\_max3}$), which is reduced with an increasing vehicle speed (v).

7. A control device according to any one of claims 1 to 6, **characterised in that** the desired coupling torque ($M_K$ desired) is determined by the control unit by addition of the corrected basic pre-control fraction ($M_{K\_basic\_corr}$) with a driving dynamic control fraction ($M_{K\_controller}$).

8. A control device according to any one of claims 1 to 7, **characterised in that** the desired coupling torque ($M_K$ desired) to be adjusted is determined by the control unit taking into account a maximally permissible limiting torque ($M_{K\_max}$) predetermined by the degree of loading of the actuator device.

**Revendications**

1. Dispositif de commande d'un véhicule à quatre roues au moins de temps en temps motrices, comportant une unité de commande qui répartit de manière variable le couple moteur fourni par une unité d'entraînement aux roues motrices primaires reliées en permanence à l'unité d'entraînement et aux roues motrices secondaires qui peuvent être reliées à la demande à l'unité d'entraînement par l'intermédiaire d'un embrayage de transfert, cette répartition étant variable en ce que l'unité de commande détermine un couple d'embrayage de consigne qui se règle à l'aide d'un dispositif actionneur au niveau de l'embrayage de transfert,
l'unité de commande (8 ; 8, 10) recevant au moins un signal d'entrée pour saisir la position de la pédale d'accélérateur (FP) en étant réalisé pour qu'en déterminant le couple d'embrayage de consigne ($M_{Ksoll}$), on tient compte d'une composante de commande préalable de base ($M_{K\_Grund}$), qui est prédéfinie en fonction de la position (FP) de la pédale d'accélérateur et est corrigée en fonction d'autres paramètres saisis et transmis par l'unité de commande,
**caractérisé en ce que**
lors de la détermination du couple d'embrayage de consigne ($M_{Ksoll}$), on tient également compte du couple caché ($M_{K\text{-}Delta\text{-}n}$) rapporté au patinage des roues, ce couple pouvant se traduire par un grippage de la ligne de transmission.

2.  Dispositif de commande selon la revendication 1,
    **caractérisé en ce qu'**
    un autre paramètre est la vitesse d'actionnement de la pédale d'accélérateur (dFP/dt) et on augmente la composante de commande préalable de base ($M_{K\text{-}Gund}$) en fonction de l'augmentation de la vitesse d'actionnement de la pédale d'accélérateur.

3.  Dispositif de commande selon la revendication 1 ou 2,
    **caractérisé en ce qu'**
    un autre paramètre est la vitesse de rotation du moteur ($n_{Mot}$) et on augmente la composante de commande préalable de base ($M_{K\text{-}Grund}$), avec l'augmentation de la vitesse de rotation du moteur ($n_{Mot}$).

4.  Dispositif de commande selon l'une des revendications 1 à 3,
    **caractérisé en ce qu'**
    un autre paramètre est l'angle de direction (LW) et on réduit la composante de commande préalable de base ($M_{K\text{-}Grund}$), en fonction de l'augmentation de l'angle de braquage (LW).

5.  Dispositif selon l'une des revendications 1 à 4,
    **caractérisé en ce qu'**
    un autre paramètre est le couple moteur ou le couple d'entraînement ($M_{Ant}$) de l'arbre de sortie de la transmission et avec l'augmentation du couple moteur ou du couple d'entraînement ($M_{Ant}$), on augmente la composante de commande préalable de base ($M_{K\text{-}Grund}$).

6.  Dispositif selon l'une des revendications 1 à 4,
    **caractérisé en ce qu'**
    un autre paramètre est la vitesse (v) du véhicule et **en ce qu'**à mesure que la vitesse (v) du véhicule augmente, on réduit la composante de commande préalable de base ($M_{K\text{-}Grund}$), ou on se limite à une composante de commande préalable de base ($M_{K\text{-}v\text{-}max1}$ ; $M_{K\text{-}v\text{-}max2}$ ; $M_{K\text{-}v\text{-}max3}$), maximum autorisée en fonction de la vitesse du véhicule, cette fraction de commande préalable de base étant réduite avec l'augmentation de la vitesse (v) du véhicule.

7.  Dispositif de commande selon l'une des revendications 1 à 6,
    **caractérisé en ce que**
    le couple d'embrayage de consigne à régler ($M_{Ksoll}$) se détermine par l'unité de commande en faisant l'addition de la composante de commande préalable de base corrigée ($M_{K\text{-}Grund\text{-}korr}$), avec une composante de régulation de la dynamique de roulage ($M_{K\text{-}Regler}$).

8.  Dispositif de commande selon l'une des revendications 1 à 7,
    **caractérisé en ce que**
    le couple d'embrayage de consigne ($M_{Ksoll}$) est déterminé par l'unité de commande en tenant compte d'un couple de limitation maximum autorisé ($M_{K\text{-}max}$), fixé par le degré de sollicitation du dispositif d'actionneur.

Fig. 1

$n_{VL}$

$n_{VR}$

FP

LW

r

dFP/dt

$M_{Ksoll}$

$n_{Mot}$ , $M_{Ant}$

$n_{HR}$

$n_{HL}$

4

2

5

1

10

9.1

9.2

9

6

3

7

8

EP 1 648 728 B1

7

Fig. 2

EP 1 648 728 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5152362 A
- DE 10054023 A1

- DE 3427725 C2